# EUROPEAN PATENT SPECIFICATION

(11) **EP 1 018 034 B1**
(45) Date of publication and mention of the grant of the patent: **26.11.2003**
(21) Application number: 98950070.7
(22) Date of filing: 22.09.1998
(51) Int. Cl.: G01T 1/178, G01T 7/00

(54) **SELECTIVE MONITORING OF TRITIUM-CONTAINING SPECIES IN A GAS**
VERFAHREN UND VORRICHTUNG ZUR SELEKTIVEN ÜBERWACHUNG VON TRITIUM ENTHALTENDEM WASSERDAMPF IN EINEM GAS
PROCEDE ET APPAREIL PERMETTANT DE SURVEILLER SELECTIVEMENT DE LA VAPEUR D'EAU TRITIEE DANS UN GAZ

(30) Priority: 24.09.1997 GB 9720371
(43) Date of publication of application: 12.07.2000
(73) Proprietor: EUROPEAN ATOMIC ENERGY COMMUNITY (EURATOM), 2920 Luxembourg (LU)
(72) Inventor: EDWARDS, Robert, Arthur, Henry, I-21020 Ispra (IT); PACENTI, Paolo, I-21020 Ispra (IT)
(74) Representative: Freylinger, Ernest T.
(86) International application number: EP9806047
(87) International publication number: WO99015912

(56) References cited:
- GB-A- 1 092 797
- US-A- 3 676 360
- US-A- 4 562 158

## Description

The present invention is concerned with a method and apparatus for selectively monitoring hydrophilic tritium-containing species in a gas, and in particular with such a method and apparatus which selectively monitors hydrophilic tritium-containing species in the air of a controlled area for tritium handling.

Tritium is an isotope of hydrogen which undergoes radioactive decay by emission of a beta-particle. The most common forms of tritium encountered in air are the elemental forms HT, DT or T2 (usually referred to generically as HT) and the oxidised forms HTO, DTO and T2O (usually referred to generically as HTO). The elemental form of tritium has a radiotoxicity 25000 times lower than the oxidised form, according to the International Commission on Radiation Protection. This is because, whereas the oxidized form mixes thoroughly with water in the lungs, the elemental form is hardly absorbed at all and shows a slow rate of isotope exchange with water in the body. It is also thought that the absorption of HT has been somewhat underestimated, so that a HTO/HT radiotoxicity ratio of as low as 1000 may be more appropriate.

Other tritiated molecules, such as tritiated hydrocarbons, methanol etc., can often be present in the gas. The radiotoxicities of these species depends on the extent to which they enter, or exchange tritium with, water in the lungs.

Clearly it is important to distinguish between the chemical forms of tritium, especially between the most common forms; oxidized and elemental; because of the large difference in radiotoxicity.

Presently tritium is monitored either without discriminating between the aforementioned two main chemical forms, by, for example, using ionisation chambers, internal gas-proportional counters or the like, or using scintillators of various kinds, such as, for example, anthracene, or the like. Other means include delayed methods that separate the humidity from the air, for example, by absorption in a bubbler, desiccation, condensation or freezing. The sample must then be measured by, for example, liquid scintillation counting or alternatively by one of the above identified methods.

Monitoring and measurement of tritium concentration in ambient air, is generally carried out using monitors such as ionisation chambers.

One type of monitor, selective for tritiated water, which has been previously used is generally based on two ionisation chambers connected by a selectively permeable (Nafion-Dupont) membrane. Such a monitor has been developed so as to discriminate between HTO and HT concentrations in a gas. Monitors of this type generally suffer from the disadvantage that they have a limited discrimination factor due to the permeability of the membrane for both HTO and HT. Furthermore, they can take long periods of time to perform the necessary measurements due to the time-period which is sufficient for the gas to penetrate the membrane. Such systems are also typically bulky and expensive.

Another type of HTO-selective monitor consists of two ionization chambers in series, separated by a drier. The HTO concentration is deduced by subtracting the signal emitted by the second ionization chamber from that of the first ionization chamber. A disadvantage of this type of system is that, if HT is present in higher concentrations than HTO, the errors in the ionization chamber measurements may greatly exceed the HTO concentration. The system is also bulky and expensive.

GB-A-1 092 797, discloses a scintillator element for selective response to tritiated water vapour and which comprises a solid scintillator material which lacks the essential features associated with the present invention.

It is an object of the present invention to alleviate such disadvantages, and additionally to provide a novel method and apparatus which can discriminate between the oxidised and elemental forms of tritium in a gas.

Therefore, according to a first aspect of the present invention there is provided a scintillator element, suitable for selective response to tritiated water vapour and other hydrophilic tritiated species in a gas, comprising a solid scintillator material characterised in that said scintillator material comprises a layer of hygroscopic material thereon. Such a scintillator advantageously allows tritiated water vapour or other hydrophilic gas species, such as, for example, tritiated ammonia, tritiated methanol or the like to enter or exchange tritium, holding the tritium from said species in close proximity to the surface of the solid scintillator material.

The range of beta-emission from tritium (average about 0.4 microns in liquid water) allows the tritium in the hygroscopic layer to excite the solid scintillator component of the hygroscopic scintillator element. Advantageously, the hygroscopic material may comprise a layer of any hygroscopic or deliquescent substance such as a solution of deliquescent compound, or an aqueous gel of said compound. In one embodiment a hydrated solid or zeolite may be used which has the advantage that for some desired applications they are selective only for tritiated water, and not other hydrophilic species.

The range of tritium beta-emissions being limited, only the surface region of the scintillator material of the scintillator element contributes to the monitor sensitivity. Therefore said scintillator material may advantageously be provided in a form which comprises a high specific surface area, for example as a sheet, as fibres, powder, powder compact, paint, varnish or a combination of the said forms.

There is provided by a second aspect of the present invention a method of monitoring tritiated water vapour or other tritiated species activity in a gas, which method comprises contacting said gas with a scintillator according to the invention, said scintillator being enclosed in a substantially light tight container, and measuring the light emitted from said hygroscopic scintillator, the amount of said emitted light providing a measure of the tritiated activity of said gas.

The method according to this aspect of the present invention advantageously discriminates between the oxidised form of tritium in a gas, and the elemental form of tritium, the oxidised form of tritium being highly radio-toxic compared to the elemental form.

Furthermore, during operation the hygroscopic scintillator element contains an amount of HTO typically contained in a volume of gas much larger than the volume of the element. Therefore, the method according to the first aspect of the present invention advantageously allows a much more compact format than an ionization chamber sensitive to the same activity of HTO in gas.

Advantageously, the method according to this aspect of the present invention may have a sensitivity to all tritium-containing species in the gas, substantially in proportion to the amount in which they enter or exchange tritium with the water-containing layer in the hygroscopic scintillating element. Since the relative radiotoxicity of the tritiated species depends substantially on their entry and isotope-exchange with water in the human lung, the method provides a good indication of the overall radiotoxicity of the gas mixture due to all tritium species present.

Solid scintillators advantageously emit light when subjected to beta-emissions from tritium, and, unlike liquid scintillation cocktails, have a stable geometrical form and negligible evaporation rates. Preferably, the scintillator according to the invention may be, for example, a plastic, a glass, an inorganic "phosphor" (e.g. doped zinc sulphide), an oxide-based material (e.g. Yttrium Aluminium Garnet "YAG" or Yttrium Aluminium Perovskite "YAP": crystalline oxides available in transparent single crystal form), or a combination of these materials, none of which absorb significant quantities of water.

Advantageously, to improve wetting, the solid scintillator material may be pre-treated on the surface with a detergent, or subjected to a hydrophilic surface treatment such as sulfonation or the like; or alternatively detergent may added to the aqueous component.

Preferably, a light guide may be provided to help transmit light from the scintillator to the light detector(s). In some cases, the solid scintillator material itself may act as a light guide. Preferably, where the detectors are, for example, remote from said scintillator element and outside any light tight container, the light guide may be of a material which prevents entry or exit of any light.

When measuring tritiated activity in a process gas, such as, air, the humidity of the air can affect the reading in two ways. Firstly, for a given activity of tritiated water, for example, in the gas (in terms of Becquerel per cubic meter of gas), the concentration of tritium per gram of water is inversely proportional to the humidity of the gas. This effect tends to decrease the sensitivity of the monitor (in terms of Becquerel per cubic meter of gas) as the humidity increases. Secondly, the amount of water present in the hydrated layer increases with the humidity, depending on the absorption characteristics of the hygroscopic material. This in turn tends to increase the amount of water contributing to the scintillation, and hence tends to increase the output of the monitor as humidity increases. Therefore, the two effects tend to cancel each other. Preferably, by optimizing the nature and thickness of the layer of hygroscopic material, the variation in sensitivity of the output with changing humidity in the gas can be minimized.

In a preferred embodiment of this aspect of the present invention, the light emitted by the hygroscopic scintillator element is measured by one or more light detectors which include photomultipliers, multichannel plates, or photodiodes or the like which would be well known to those skilled in the art. The electronics associated with such light detectors may use conventional current-pulse-counting, each pulse corresponding substantially to a light pulse from a scintillation event. As is usual for scintillation techniques, the rate of current pulses is substantially proportional to the rate of scintillation events. Where two or more light detectors are used, one may advantageously reduce noise background by well-known pulse coincidence detection techniques. If the light output is sufficient, continuous average-current monitoring may be used instead of pulse counting.

In one embodiment of this aspect of the present invention the gas to be monitored may be air. Thus, advantageously, the method may be used to monitor tritium intake, for example, by radiation workers in a controlled handling area. In a preferred embodiment the air tritium monitor may be small enough to be portable which may therefore allow it to be carried continuously by workers in a controlled area.

In another embodiment of this aspect of the present invention, the gas to be monitored may be enclosed in a chemical plant: an application normally described as a "process monitor". In a light-tight plant, the monitor may be inserted through the plant wall (for example into a pipe or storage tank) without the need for its own light-tight container.

Preferably, such a process monitor may be used in conjunction with a non-discriminating monitor in order to measure, by difference, the concentrations in gas or air of both tritiated water (possibly together with hydrophilic species) and elemental tritium (possibly together with other hydrophobic species). In this embodiment, the non-discriminating tritium monitor may be substantially identical to the discriminating monitor comprising a scintillator element according to the invention with the exception that the hygroscopic layer is omitted in the non-discriminating monitor.

Preferably, a second radiation monitor; preferably substantially identical to the said discriminating monitor, but sealed in a container free of radioactive gas, may be provided to compensate for background radiation fields (e.g. gamma-radiation), by subtraction: an analogous technique is already used for compensating ionization chambers for radiation background.

According to a further aspect of the invention there is provided apparatus for monitoring the level of tritiated water and other tritiated hydrophilic species in a gas, which apparatus comprises, a hygroscopic scintillator according to the invention, and means for measuring the amount of light emitted from said hygroscopic scintillator element. In one embodiment of this aspect of the invention, means may be provided for contacting said gas with said hygroscopic scintillator. The measuring means may either be connected to said hygroscopic scintillator element or may be provided remotely from it by means of a light guide.

Thus, advantageously, the apparatus according to this aspect of the invention allows for a measure of the level of tritium in a gas, such as air, to be provided. The apparatus responds with much greater sensitivity to tritiated species, such as tritiated water vapour, which are more radiotoxic because they mix or exchange hydrogen isotopes rapidly with water.

This further aspect of the present invention may be provided in the form of a stand-alone room air monitor, a personal tritium monitor or an "in-line" process gas monitor for mounting with tube connectors in the pipework of a chemical process using tritiated gas.

In one embodiment of this aspect of the invention the hygroscopic scintillator may be enclosed in a substantially light-tight container with a window(s) or aperture(s) being provided therein to allow emitted light to reach the light detector(s), in addition to an inlet adapted to allow access of said gas to the hygroscopic scintillator element but to prevent light escaping from or entering said container. An outlet may also be provided to allow flow of said gas over or through the hygroscopic scintillator element from said inlet to said outlet. Preferably, said inlet and outlet minimize the entry of external light by, for example, the use of dark or black materials and which may have a geometry which forces the light to make multiple reflections before reaching the monitor.

For a stand-alone room air monitor, a pump may preferably be provided to pass air continuously through the monitor. Furthermore, a dust filter may be mounted at the inlet. When the apparatus is used as a personal tritium monitor, a pump may be provided, or alternatively the monitor may be built into a breathing mask so that the flow of air is provided by the breathing of the worker. Furthermore, when used as a process gas monitor, a pump may be used to pass gas therethrough if the gas flow or pressure drop available inside the plant is insufficient. Such an application could be, for example, the monitoring of tritium in an inert-gas glovebox. The pump may be of many types, for example, including a membrane pump, an electrical fan or impeller, a centrifugal pump or advantageously (for reason of low power consumption) a piezo-electric fan built into a housing. Thus advantageously the apparatus according to the invention may provide a substantially continuous and accurate monitoring of the tritium radiotoxicity in a gas.

The apparatus in an alternative embodiment may also be provided in the form of a "nude" monitor for process gas in an existing light-tight tank or pipe. Lacking its own light-tight casing, the apparatus according to the invention may be fixed to an aperture in the plant wall or pipe with a substantially light-tight seal. In this embodiment, gas flow through or over the hygroscopic scintillator element may be provided by the existing flows inside the plant, or alternatively by a fan.

Advantageously, the apparatus according to the present invention uses a hygroscopic material coated onto a solid scintillator to make a hygroscopic scintillating element. Said hygroscopic layer may consist of a layer of a hygroscopic or deliquescent substance such as a solution of deliquescent compound, or an aqueous gel of said compound. Many compounds are suitable examples included but are not limited to zinc chloride, potassium acetate, phosphoric acid, lithium chloride. Alternative types of hygroscopic layers could consist of a hygroscopic organic solid or liquid, for example, poly-(ethylene oxide), a soap, sugar, polyhydroxymethylemethacrylate or a glycol. The use of a gel containing deliquescent compound may advantageously impede long-term redistribution of the hygroscopic layer across the surface. A hydrated solid such as, for example, zeolite may also be used in said hygroscopic layer. Although having a relatively slow exchange rate of water with the water vapour in the gas, this embodiment has the advantage in some special applications of being selective only for tritiated water, and not other hydrophilic species.

The solid scintillator material, or a combination of solid scintillator materials, may advantageously be applied as a paint (e.g. zinc sulphide paint) or varnish (e.g. plastic scintillator dissolved in organic solvent, possibly mixed with YAP powder) to the surface of the light guide. The advantages are a reduction in cost of scintillator material, efficient light collection, and relative insensitivity to gamma radiation, due to the small mass of solid scintillator present. In other foreseen designs the solid scintillator may function as a light guide.

In the apparatus according to the invention, the inner walls of the light-tight container, or the surface of a light guide, may preferably be made reflective, for example by polishing or aluminizing, to improve light collection efficiency.

The apparatus according to the invention has a certain sensitivity to HT and other hydrophobic tritiated species due to the arrival at the scintillator of tritium beta emissions arising from such species in the gas in and around the scintillator element, the range of tritium emissions in gas being much greater than in condensed phases. This sensitivity to HT is approximately proportional to the volume of gas in and around the scintillator element. It is possible to vary the relative sensitivity to HT, for a given HTO sensitivity, by keeping the same surface area and preparation method for the hygroscopic scintillator element, but varying its overall size to change the gas space inside the scintillating element. Alternatively, extra scintillator material may be added which is not covered by a hygroscopic layer. Thus the ratio of HTO to HT sensitivity may be adjusted to match a desired value, for example 1000.

Preferably, the measuring means for measuring light emitted by the hygroscopic scintillator element comprises one or more light detectors, including photomultipliers, multichannel plates with photodiode detectors, or photodiodes. The electronics associated with such light detectors may use conventional current-pulse-counting, each pulse substantially corresponding to light pulse from a scintillation event. As usual for scintillation techniques, the rate of current pulses is substantially proportional to the rate of scintillation events. Where two or more light detectors are used, one may advantageously reduce noise background by well-known pulse coincidence detection techniques. If the light output is sufficient, continuous average-current monitoring may be used instead of pulse counting.

Preferably, electronics are provided to convert the rate of charge pulses or average current into a signal which is substantially proportional to the radiotoxicity of the gas, or its logarithm. Said signal may preferably be displayed on a meter or digital display and/or converted to an audible signal, and/or made available as an output to a computer, data-logger or other external recording or control apparatus. A standard humidity gauge may be incorporated into the monitor, or a separate humidity gauge may be read into said recording and control apparatus, in order to allow automated or manual compensation for the effects of gas or air humidity on the sensitivity of the present tritium monitor or apparatus according to the invention. Furthermore, it is foreseen that the function of said humidity gauge may be incorporated into the monitor by measuring the electrical AC or DC conductivity of the hygroscopic layer, for example by measuring the resistance between two metallic contacts applied to the surface of the solid scintillator before coating with the hygroscopic layer.

The invention may be more clearly understood by the following description of an embodiment thereof, with reference to the accompanying drawing given by way of example only, wherein

Figure 1 is an illustration of apparatus for monitoring the tritiated water content, or more generally, radiotoxicity of a gas containing tritium species, according to the invention.

Figures 2 to 6 illustrate alternative embodiments of the apparatus of Figure 1. In each figure there is shown one or more light detectors, and a hygroscopic scintillator element. Some designs have a light guide incorporated therein.

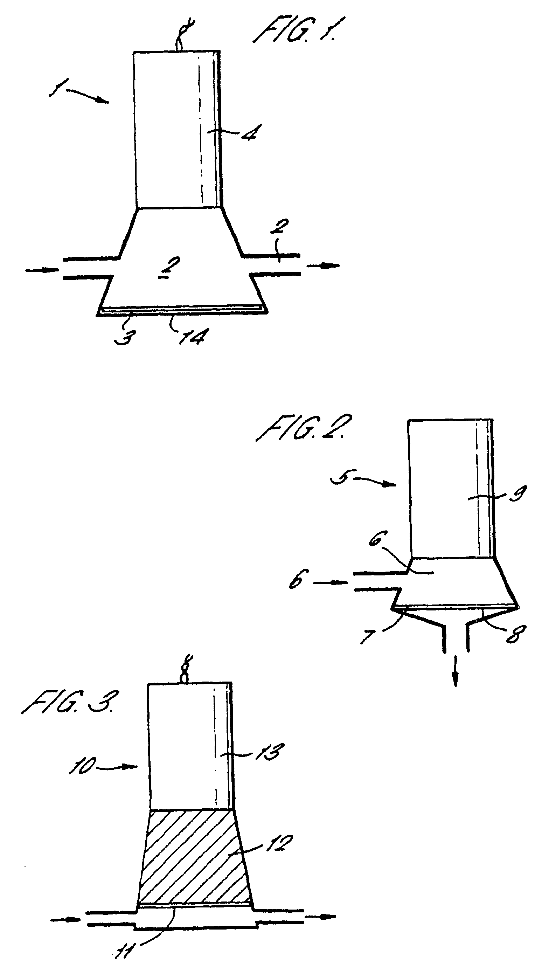

Referring to the drawings and initially to Figure 1, there is shown a simple design for a hygroscopic scintillator element according to the invention incorporated into a monitor 1. In use the monitor functions when gas 2 passes over one surface of a flat hygroscopic scintillator element 3, which can be supported by a backing plate 14. In this embodiment no light guide is provided and the scintillation light pulses emitted from the element 3 pass through the sample gas 2 to reach the light detector 4. This design is particularly suitable for fragile scintillator elements: powder compacts and the like and for layers of substantially opaque and non-porous solid scintillator, such as paints of inorganic phosphors (e.g. doped zinc sulphide paint).

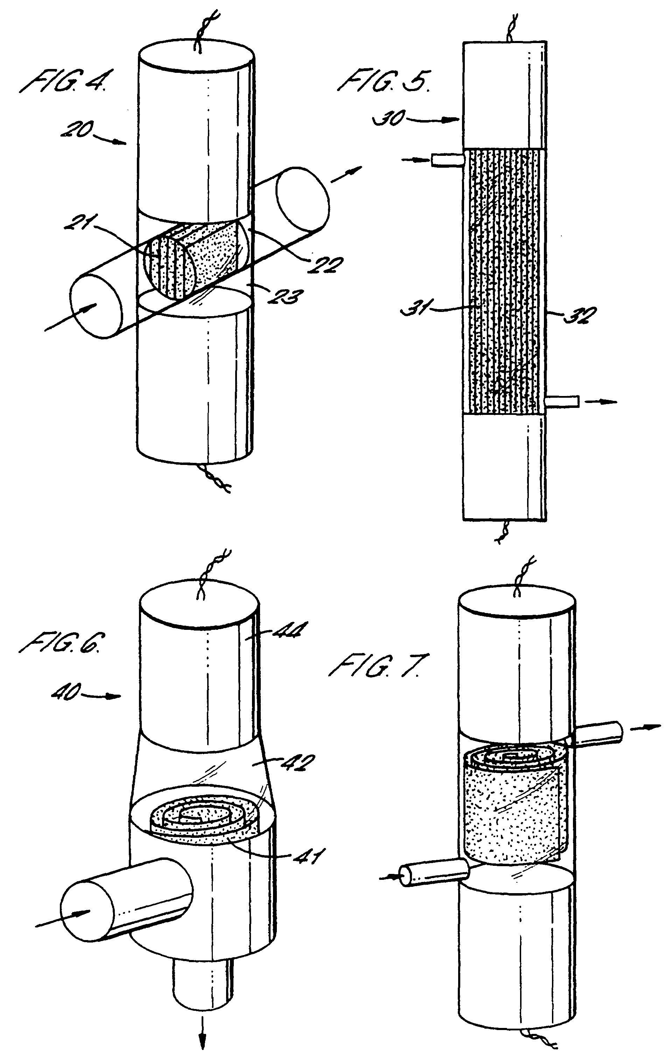

The monitor 5 illustrated in Fig.2 is of similar geometry to the monitor of fig. 1 except that the gas 6 passes through a porous hygroscopic scintillator element 7, for example a porous powder compact supported on a filter 8. In this case, the amount of hygroscopic material applied to the powder compact should be limited, not to block the passage of the test gas. The light pulses emitted from the scintillator element 7 reach the light detector 9.

The monitor 10 illustrated in Figure 3 comprises a simple geometry with high light collection efficiency which is achieved by coating a thin layer of solid scintillator material 11 onto the face of a light guide 12, before applying the hygroscopic layer. Even more simply, it is possible to eliminate the light guide 12, applying the solid scintillator directly onto the face of the light detector 13.

Fig.4 illustrates a monitor 20 comprising parallel sheets of solid scintillator (e.g. plastic, glass, scintillating crystal) 21, having the hygroscopic layer coated thereon, and glued (using transparent glue) inside a channel 22 traversing a light guide 23. The same overall geometry may be realized by making the sheets from the light-guide material, and then coating them with a layer of solid scintillator, before applying the hygroscopic layer.

The overall geometry shown in fig.4 can alternatively be obtained by making it from a single block of plastic or resin: e.g. by injection moulding which can act as a light guide. The surfaces of the parallel plates are then coated first with a solid scintillator and then with a hygroscopic layer.

In monitor 30 illustrated in figure 5, solid scintillator fibres 31 are coated with the hygroscopic layer and held in a tube 32: the fibres themselves acting as light guides. The same geometry can be obtained by first coating non-scintillating transparent fibres with a layer of solid scintillator.

Figure 6 illustrates a monitor 40 a single light-detector 44 with a spiral of hygroscopically-coated plastic scintillator sheet 41 glued onto the end-plate of the light guide 42, which forces the gas to spiral inwards towards the central outlet tube (reverse flow is also possible). Fig.7 shows a similar hygroscopically coated scintillator element, this time with axial gas flow and no light guide.

Figures 4,5 and 7 show double light detectors, to enable background noise reduction by coincidence detection. In each case, one of the two detectors can be replaced by a reflector if pulse coincidence detection is not desired. Conversely, in the other designs, two light detectors may be used instead of one to allow pulse coincidence detection: they can both view the same side of the hygroscopic scintillator element where it is not advantageous to mount the detectors on opposite sides (e.g. if the scintillator is opaque).

### Prototype monitors and initial results

To be of use, the monitor must have a limit-of-detection for HTO below the limit set by the International Commission on Radiation Protection for the HTO concentration in air which may be breathed by workers. This value is the derived air concentration (DAC), and equals 8x10⁵ Bq/m3.

Two monitors were constructed using hygroscopically-coated plastic scintillator in sheet form. The geometries of the monitors corresponded to those illustrated in fig.4 and fig. 6. After forming the scintillator sheet into a spiral (fig. 6) or gluing the sheets in position (fig.4), the surface of the plastic scintillator material was treated with nonionic detergent, dried in air, painted with a layer of zinc chloride solution, and the excess blown off with compressed air. By varying the concentration of the zinc chloride (a strongly deliquescent salt) it was possible to produce a continuous solution layer about 1 micron thick, in equilibrium with the humidity of room air. This was found to be about the optimum thickness for giving a combination of good sensitivity and fast response to changing HTO concentrations in the passing gas.

Subsequently, a third prototype monitor was made using the geometry illustrated in fig 2. In this case the scintillator element 7 was made using a compacted layer of YAP powder mounted on a glass-fibre filter. This was wetted with detergent, dried and then a certain amount of zinc chloride solution was uniformly applied to render it hygroscopic; in the first tests 2mg of solution was applied (weighed when in equilibrium with ambient air at 58% relative humidity).

Air loaded with 30% relative humidity of either plain water vapour or tritiated water vapour was passed through the monitors according to the invention at 3 litres/minute.

All monitors showed sensitivities to HTO better than 0.1 DAC . If inlet air containing plain water vapour was substituted by air containing tritiated water vapour, 50% of the final value was reached in less than 1 minute. The time response results were roughly what one would expect on the basis of complete mixing between the HTO in the passing air with the water in the zinc chloride solution. This conclusion was confirmed by tests which showed that the response time was inversely proportional to the flow rate.

Tests were subsequently conducted with various loadings of zinc chloride solution and with various relative humidities in the test gas. The effect of changing relative humidity, for a given HTO activity in the test gas, depended on the detector geometry and the amount of zinc chloride applied. Tests using a thickness of zinc chloride about 0.4 microns (at 60% r.h.) showed the least change in sensitivity with relative humidity.

There was a slight tendency for the monitors using plastic scintillator to reduce in sensitivity with time: this was ascribed to the redistribution of the deliquescent salt layer so as to make it less uniform in thickness. The effect was reduced by replacing the zinc sulphate solution by a polymeric gel of zinc sulphate solution.

## Claims

1. A scintillator element (3) suitable for selective response to tritiated water vapour and other hydrophilic tritiated species in a gas, comprising a solid scintillator material **characterised in that** said scintillator material comprises a layer of hygroscopic material thereon.

2. A scintillator element according to claim 1 wherein said solid scintillator material comprises any of, a plastic, an inorganic "phosphor", such as doped zinc sulphide, an oxide based material, a glass or a combination of these materials.

3. A scintillator element according to claim 1 or 2 wherein said hygroscopic material comprises a layer of a hygroscopic or deliquescent substance as a solution or as an aqueous gel.

4. A scintillator element according to claim 1 wherein said hygroscopic layer is from 0.4 to 1 micron in thickness.

5. A scintillator element according to any preceding claim wherein said hygroscopic material comprises an aqueous or gel solution of a deliquescent salt, base or organic salt or an inorganic or organic substance which can adsorb water, or a combination of any of said substances.

6. A scintillator element according to any preceding claim wherein said hygroscopic material is any of zinc chloride, potassium acetate, phosphoric acid or lithium chloride.

7. A scintillator element according to any preceding claim which further comprises a hydrated solid such as zeolite.

8. A scintillator element according to any preceding claim which is in the form of a sheet, fibre, rod, spiral roll, powder, a powder compact, varnish, paint or a combination thereof.

9. A method of making a hygroscopic scintillator element, suitable for selective response to tritiated water vapour or other hydrophilic tritiated species in a gas, which method comprises coating a solid scintillator material with a layer of a hygroscopic material the solid scintillator material having been pretreated with a detergent or been subjected to a hydrophilic surface treatment.

10. A method according to claim 9 wherein said pre-treating step comprises sulfonation.

11. A method for monitoring the activity of tritiated water vapour or other hydrophilic tritiated species in a gas, which method comprises:
(a) providing a hygroscopic scintillator element (3) according to any of claims 1 to 7 for contact with a gas to be tested;
(b) measuring the light emitted from said hygroscopic scintillator using measuring means (4), the amount of said light emitted from said scintillator element providing a measure of the activity of the tritiated water vapour or said hydrophilic tritiated species in the gas.

12. A method according to claim 11 wherein said hygroscopic scintillator is provided in an aperture in the wall of a substantially light-tight plant containing said gas, a suitable window or aperture being provided to allow said measuring means to measure only light emitted form the said hygroscopic scintillator element.

13. A method according to claim 11 wherein said hygroscopic scintillator element (21) is provided in a substantially light-tight container (20), which incorporates an inlet adapted to allow the access of said gas to said element and which prevents light entry to or escape from said container.

14. A method according to claim 11 which container (20) additionally includes an outlet to allow passage of said gas therethrough.

15. A method according to any one of claims 9 to 14 wherein the light emitted by said hygroscopic scintillator (41) is measured remotely by said measuring means (44) spatially separated from said hygroscopic scintillator, but optically connected thereto.

16. A method according to any of claims 11 to 15 wherein the time averaged output of the measuring means is measured as a continuous current, and used to indicate the tritium radiotoxicity of said gas, and/or its tritiated water activity on a meter, a digital display as an audible signal, and/or as an output to a computer, data logger, recorder, control system.

17. A method according to any one of claims 9 to 16 wherein said measuring means (4,44 ) comprises one or more photomultiplier tubes, multichannel plates or photodiodes.

18. A method according to claim 17 wherein the rate of signal pulses from said measuring means (4, 44) is measured and used to indicate the tritium radiotoxicity of said gas, and/or its tritiated water activity, on a meter, a digital display as an audible signal, and/or as an output to a computer, data logger, recorder, or control system or the like. signal, and/or as an output to a computer, data logger, recorder, or control system or the like.

19. A method according to claim 17 or 18 wherein more than one photomultiplier tube, multichannel plate or photodiode is provided.

20. A method according to any of claims 11 to 19 which further comprises using a non-discriminating tritium monitor in order to measure, by difference, the activities in said gas of both tritiated water and elemental tritium.

21. A method according to claim 20, wherein the non-discriminating monitor is substantially identical to the scintillator element (3) according to any of claims 1 to 7, with the exception that the hygroscopic layer is omitted in the non-discriminating monitor.

22. A method according to any of claims 9 to 21 wherein said g as to be measured is air.

23. Apparatus for monitoring the activity of tritiated water vapour and other hydrophilic tritiated species in a gas, which apparatus comprises:
(a) a hygroscopic scintillator element (3) according to any of claims 1 to 7; and
(b) means (4) for measuring light emitted from said hygroscopic scintillator element (3), the amount of light emitted from said scintillator element providing a measure of the tritium containing species in said gas.

24. Apparatus according to claim 23 wherein said scintillator element is provided in a substantially light tight container including inlet means adapted to allow the gas to contact the scintillator element without permitting entry or exit of light to or from said container.

25. Apparatus according to claim 23 or 24 which further comprises means for contacting said gas with said hygroscopic scintillator element.

26. Apparatus according to any of claims 23 to 25 which further comprises an outlet in said container to allow passage of said gas or vapour therethrough.

27. Apparatus according to claim 25 or 26 which comprises a pump to facilitate the passage of gas through said container.

28. Apparatus according to any of claims 23 to 27 wherein the light emitted by said hygroscopic scintillator element (41) is measured remotely by said light measuring means (44) spatially separated from said hygroscopic scintillator, but optically connected thereto by means of a light guide (42).

29. Apparatus according to any of claims 23 to 28 wherein said scintillator element (41) is provided in the form of a sheet, fibre, rod, spiral roll, powder, a powder compact, varnish, paint, or a combination of said forms.

30. Apparatus according to any of claims 23 to 29 wherein said measuring means (44) comprises one or more photomultiplier tubes, multichannel plates or photodiodes.

31. Apparatus according to claim 30 wherein the rate of signal pulses from said Measuring means is measured and used to indicate the tritium radiotoxicity of said gas, and/or its tritiated water activity, on a meter, a digital display, as an audible signal and/or as an electrical output to a computer, data logger, recorder or control electronics.

32. Apparatus according to claim 30 wherein a plurality of a photomultiplier tube, multichannel plate or photodiode is provided.

33. Apparatus according to claims 31 or 32 wherein the time averaged output of said measuring means is measured as a continuous current, and used to indicate the tritium radiotoxicity of said gas on a meter, a digital display as an audio signal, and/or as an output to a computer, data logger, recorder, control system or the like.

34. Apparatus according to any of claims 23 to 33 which further comprises a non-discriminating tritium monitor so as to measure, by difference, the concentrations in said gas or vapour of both tritiated water or other possible hydrophilic species and elemental tritium or other hydrophobic radioactive species present.

35. Apparatus, according to claim 34, wherein said non-discriminating monitor is substantially identical to a scintillator element (3) according to any of claims 1 to 7, with the exception that the hygroscopic layer is omitted in the non-discriminating monitor.

36. Apparatus according to any of claims 23 to 35 which further comprises a second sealed radiation monitor to compensate for background radiation fields, by subtraction.

37. Apparatus according to claim 35 wherein said sealed radiation monitor is substantially identical to the scintillator according to any of claims 1 to 5 and sealed in a container free of radioactive gas.

38. Apparatus according to claim 23 wherein the gas to be monitored comprises air.

39. Apparatus according to claim 23 which is incorporated in a breathing mask.

## Patentansprüche

1. Szintillatorelement (3), das für selektives Ansprechen auf tritiierten Wasserdampf und andere hydrophile tritiierte Spezies in einem Gas geeignet ist, umfassend ein festes Szintillatormaterial; **dadurch gekennzeichnet, dass** das Szintillatormaterial eine Schicht hygroskopischen Materials darauf umfasst.

2. Szintillatorelement nach Anspruch 1, wobei das feste Szintillatormaterial irgendeins von einem Kunststoff, einem anorganischen Leuchtstoff (z.B. dotiertes Zinksulfid), einem oxidbasierten Material, einem Glas oder einer Kombination dieser Materialien umfasst.

3. Szintillatorelement nach Anspruch 1 oder 2, wobei das hygroskopische Material eine Schicht einer hygroskopischen oder zerfließlichen Substanz als Lösung oder als wässriges Gel umfasst.

4. Szintillatorelement nach Anspruch 1, wobei die hygroskopische Schicht zwischen 0,4 und 1 µm dick ist.

5. Szintillatorelement nach irgendeinem der vorangehenden Ansprüche, wobei das hygroskopische Material umfasst: eine wässrige Lösung oder Gellösung eines zerfließlichen Salzes, einer zerfüeßlichen Base oder eines zerfließlichen organischen Salzes; oder eine anorganische oder organische Substanz, die Wasser adsorbieren kann; oder eine Kombination irgendeiner dieser Substanzen.

6. Szintillatorelement nach irgendeinem der vorangehenden Ansprüche, wobei das hygroskopische Material irgendeins von Zinkchlorid, Kaliumacetat, Phosphorsäure oder Lithiumchlorid ist.

7. Szintillatorelement nach irgendeinem der vorangehenden Ansprüche, das ferner ein hydratierten Feststoff wie z.B. einen Zeolith umfasst.

8. Szintillatorelement nach irgendeinem der vorangehenden Ansprüche, das die Form einer Platte, Faser, Stange, Spiralrolle, eines Pulvers, Pulverpresslings, Lacks, einer Anstrichfarbe oder einer Kombination daraus aufweist.

9. Verfahren zur Herstellung eines hygroskopischen Szintillatorelements, das für selektives Ansprechen auf tritiierten Wasserdampf oder andere hydrophile tritiierte Spezies in einem Gas geeignet ist, wobei das Verfahren das Beschichten eines festen Szintillatormaterials mit einer Schicht hygroskopischen Materials umfasst, wobei das feste Szintillatormaterial vorher mit einem Reinigungsmittel vorbehandelt oder einer hydrophilen Oberflächenbehandlung unterzogen wurde.

10. Verfahren nach Anspruch 9, wobei der Vorbehandlungsschritt eine Sulfonierung umfasst.

11. Verfahren zur Überwachung der Aktivität von tritiiertem Wasserdampf oder anderen hydrophilen tritiierten Spezies in einem Gas, wobei das Verfahren umfasst:
a) Bereitstellen eines hygroskopischen Szintillatorelements (3) nach irgendeinem der Ansprüche 1 bis 7, um es in Kontakt mit einem zu prüfenden Gas zu bringen;
b) Messen des vom hygroskopischen Szintillator ausgestrahlten Lichts mit Messmitteln (4), wobei die Menge des vom Szintillatorelement ausgestrahlten Lichts eine Messung der Aktivität des tritiierten Wasserdampfs oder der hydrophilen tritiierten Spezies im Gas bereitstellt.

12. Verfahren nach Anspruch 11, wobei der hygroskopische Szintillator in einer Öffnung in einer Wand einer im Wesentlichen lichtdichten Anlage bereitgestellt wird, die das Gas enthält, wobei ein geeignetes Fenster oder eine geeignete Öffnung vorgesehen ist, um den Messmitteln nur das Messen des vom hygroskopischen Szintillatorelement ausgestrahlten Lichts zu ermöglichen.

13. Verfahren nach Anspruch 11, wobei das hygroskopische Szintillatorelement (21) in einem im Wesentlichen lichtdichten Behälter (20) bereitgestellt wird, der einen Einlass enthält, der darauf abgestimmt ist, das Gas zum Element durchzulassen, und verhindert, dass Licht in den Behälter eindringt oder aus dem Behälter entweicht.

14. Verfahren nach Anspruch 11, wobei der Behälter (20) zusätzlich einen Auslass einschließt, um das Gas dadurch strömen zu lassen.

15. Verfahren nach irgendeinem der Ansprüche 9 bis 14, wobei das vom hygroskopischen Szintillator (41) ausgestrahlte Licht an entfernter Stelle mittels der Messmittel (44) gemessen wird, die räumlich vom hygroskopischen Szintillator getrennt sind, aber optisch damit in Verbindung stehen.

16. Verfahren nach irgendeinem der Ansprüche 11 bis 15, wobei das zeitlich durchschnittliche Ausgangssignal der Messmittel als ein kontinuierlicher Strom gemessen und dazu verwendet wird, die Tritium-Radiotoxizität des Gases und/oder die Aktivität seines tritiierten Wassers an einem Messgerät, an einer digitalen Anzeige, als hörbares Signal und/oder als Ausgangssignal an einem Computer, Messwertschreiber, Aufzeichnungsgerät oder Kontrollsystem anzuzeigen.

17. Verfahren nach irgendeinem der Ansprüche 9 bis 16, wobei die Messmittel (4, 44) eine oder mehrere Photomultiplier-Röhren, Vielkanalplatten (MCP) oder Photodioden umfassen.

18. Verfahren nach Anspruch 17, wobei die Rate der Signalimpulse der Messmittel (4, 44) gemessen und dazu verwendet wird, die Tritium-Radiotoxizität des Gases und/oder die Aktivität seines tritiierten Wassers an einem Messgerät, an einer digitalen Anzeige, als hörbares Signal und/oder als Ausgangssignal an einem Computer, Messwertschreiber, Aufzeichnungsgerät, Kontrollsystem oder Ähnlichem anzuzeigen.

19. Verfahren nach Anspruch 17 oder 18, wobei mehr als eine Photomultiplier-Röhre, Vielkanalplatte (MCP) oder Photodiode bereitgestellt wird.

20. Verfahren nach irgendeinem der Ansprüche 11 bis 19, das ferner die Verwendung eines nicht-unterscheidenden Tritiummonitors umfasst, um die Aktivitäten tritiierten Wassers und elementaren Tritiums im Gas durch Differenz zu messen.

21. Verfahren nach Anspruch 20, wobei der nicht-unterscheidende Monitor im Wesentlichen identisch ist mit dem Szintillatorelement (3) nach irgendeinem der Ansprüche 1 bis 7 - mit der Ausnahme, dass die hygroskopische Schicht beim nicht-unterscheidenden Monitor entfällt.

22. Verfahren nach irgendeinem der Ansprüche 9 bis 21, wobei Luft das zu messende Gas ist.

23. Vorrichtung zur Überwachung der Aktivität von tritiiertem Wasserdampf und anderen hydrophilen tritiierten Spezies in einem Gas, wobei die Vorrichtung umfasst:
a) ein hygroskopisches Szintillatorelement (3) nach irgendeinem der Ansprüche 1 bis 7;
und
b) Mittel (4) zum Messen des vom hygroskopischen Szintillatorelement (3) ausgestrahlten Lichts, wobei die Menge des vom Szintillatorelement ausgestrahlten Lichts eine Messung der tritiumhaltigen Spezies im Gas bereitstellt.

24. Vorrichtung nach Anspruch 23, wobei das Szintillatorelement in einem im Wesentlichen lichtdichten Behälter vorgesehen ist, der Einlassmittel einschließt, die darauf abgestimmt sind, das Gas mit dem Szintillatorelement in Kontakt zu bringen, ohne dabei Licht in den Behälter eindringen oder aus dem Behälter entweichen zu lassen.

25. Vorrichtung nach Anspruch 23 oder 24, die ferner Mittel umfasst, um das Gas mit dem hygroskopischen Szintillatorelement in Kontakt zu bringen.

26. Vorrichtung nach irgendeinem der Ansprüche 23 bis 25, die ferner einen Auslass im Behälter umfasst, um das Gas oder den Dampf dadurch strömen zu lassen.

27. Vorrichtung nach Anspruch 25 oder 26, die eine Pumpe umfasst, um das Strömen des Gases durch den Behälter zu erleichtern.

28. Vorrichtung nach irgendeinem der Ansprüche 23 bis 27, wobei das vom hygroskopischen Szintillatorelement (41) ausgestrahlte Licht an entfernter Stelle mittels der Lichtmessmittel (44) gemessen wird, die räumlich vom hygroskopischen Szintillator getrennt sind, aber optisch mittels eines Lichtleiters (42) damit in Verbindung stehen.

29. Vorrichtung nach irgendeinem der Ansprüche 23 bis 28, wobei das Szintillatorelement (41) in Form einer Platte, Faser, Stange, Spiralrolle, eines Pulvers, Pulverpresslings, Lacks, einer Anstrichfarbe oder einer Kombination dieser Formen vorgesehen ist.

30. Vorrichtung nach irgendeinem der Ansprüche 23 bis 29, wobei die Messmittel (44) eine oder mehrere Photomultiplier-Röhren, Vielkanalplatten (MCP) oder Photodioden umfassen.

31. Vorrichtung nach Anspruch 30, wobei die Rate der Signalimpulse der Messmittel gemessen und dazu verwendet wird, die Tritium-Radiotoxizität des Gases und/oder die Aktivität seines tritiierten Wassers an einem Messgerät, an einer digitalen Anzeige, als hörbares Signal und/oder als elektrisches Ausgangssignal an einem Computer, Messwertschreiber, Aufzeichnungsgerät oder elektronischem Kontrollgerät anzuzeigen.

32. Vorrichtung nach Anspruch 30, wobei mehrere Photomultiplier-Röhren, Vielkanalplatten (MCP) oder Photodioden vorgesehen sind.

33. Vorrichtung nach Anspruch 31 oder 32, wobei das zeitlich durchschnittliche Ausgangssignal der Messmittel als ein kontinuierlicher Strom gemessen und dazu verwendet wird, die Tritium-Radiotoxizität des Gases an einem Messgerät, an einer digitalen Anzeige, als hörbares Signal und/oder als Ausgangssignal an einem Computer, Messwertschreiber, Aufzeichnungsgerät, Kontrollsystem oder Ähnlichem anzuzeigen.

34. Vorrichtung nach irgendeinem der Ansprüche 23 bis 33, die ferner einen nicht-unterscheidenden Tritiummonitor umfasst, um so die im Gas oder Dampf vorhandenen Konzentrationen von tritiiertem Wasser oder anderen möglichen hydrophilen Spezies und von elementarem Tritium oder anderen hydrophoben radioaktiven Spezies durch Differenz zu messen.

35. Vorrichtung nach Anspruch 34, wobei der nicht-unterscheidende Monitor im Wesentlichen identisch ist mit einem Szintillatorelement (3) nach irgendeinem der Ansprüche 1 bis 7 - mit der Ausnahme, dass die hygroskopische Schicht beim nicht-unterscheidenden Monitor entfällt.

36. Vorrichtung nach irgendeinem der Ansprüche 23 bis 35, die ferner einen zweiten, eingeschlossenen Strahlungsmonitor umfasst, um die Hintergrundstrahlungsfelder durch Subtraktion zu kompensieren.

37. Vorrichtung nach Anspruch 35, wobei der eingeschlossene Strahlungsmonitor im Wesentlichen identisch ist mit dem Szintillator nach irgendeinem der Ansprüche 1 bis 5 und in einem Behälter eingeschlossen ist, der kein radioaktives Gas enthält.

38. Vorrichtung nach Anspruch 23, wobei das zu überwachende Gas Luft umfasst.

39. Vorrichtung nach Anspruch 23, die in eine Atemmaske integriert ist.

## Revendications

1. Elément scintillateur (3) se prêtant à une réponse sélective envers de la vapeur d'eau tritiée et d'autres espèces tritiées hydrophiles dans un gaz, comprenant une matière de scintillateur solide, **caractérisé en ce que** ladite matière de scintillateur comprend une couche de matière hygroscopique sur celle-ci.

2. Elément scintillateur selon la revendication 1, dans lequel ladite matière de scintillateur solide comprend une matière quelconque parmi une matière plastique, un "phosphore" inorganique, tel que le sulfure de zinc dopé, une matière à base d'oxyde, un verre, ou une combinaison de ces matières.

3. Elément scintillateur selon la revendication 1 ou 2, dans lequel ladite matière hygroscopique comprend une couche d'une substance hygroscopique ou déliquescente sous la forme d'une solution ou d'un gel aqueux.

4. Elément scintillateur selon la revendication 1, dans lequel ladite couche hygroscopique est d'une épaisseur de 0,4 à 1 micromètre.

5. Elément scintillateur selon l'une quelconque des revendications précédentes, dans lequel ladite matière hygroscopique comprend une solution aqueuse ou de gel d'un sel, base ou sel organique, déliquescent, ou une substance inorganique ou organique qui peut adsorber de l'eau, ou une combinaison d'un nombre quelconque desdites substances.

6. Elément scintillateur selon l'une quelconque des revendications précédentes, dans lequel ladite matière hygroscopique est une matière quelconque parmi le chlorure de zinc, l'acétate de potassium, l'acide phosphorique, ou le chlorure de lithium.

7. Elément scintillateur selon l'une quelconque des revendications précédentes, qui comprend en outre un solide hydraté tel que la zéolite.

8. Elément scintillateur selon l'une quelconque des revendications précédentes, qui se trouve sous la forme d'une feuille, d'une fibre, d'une tige, d'un rouleau en spirale, d'une poudre, d'une poudre compacte, d'un vernis, d'une peinture ou d'une combinaison de ceux-ci.

9. Procédé de fabrication d'un élément scintillateur hygroscopique, se prêtant à une réponse sélective envers de la vapeur d'eau tritiée ou une autre espèce tritiée hydrophile dans un gaz, lequel procédé comprend le revêtement d'une matière de scintillateur solide, d'une couche d'une matière hygroscopique, la matière de scintillateur solide ayant été prétraitée par un détergent ou ayant subi un traitement de surface hydrophile.

10. Procédé selon la revendication 9, dans lequel ladite étape de prétraitement comprend une sulfonation.

11. Procédé pour contrôler l'activité d'une vapeur d'eau tritiée ou d'une autre espèce tritiée hydrophile dans un gaz, lequel procédé comprend les étapes consistant à :
(a) fournir un élément scintillateur hygroscopique (3) selon l'une quelconque des revendications 1 à 7 en vue d'un contact avec un gaz à tester;
(b) mesurer la lumière émise dudit scintillateur hygroscopique en employant un moyen de mesure (4), la quantité de ladite lumière émise dudit élément scintillateur fournissant une mesure de l'activité de la vapeur d'eau tritiée ou de ladite espèce tritiée hydrophile dans le gaz.

12. Procédé selon la revendication 11, dans lequel ledit scintillateur hygroscopique est prévu dans une ouverture dans la paroi d'une installation essentiellement étanche à la lumière, contenant ledit gaz, une fenêtre ou ouverture appropriée étant prévue pour permettre audit moyen de mesure de ne mesurer que la lumière émise dudit élément scintillateur hygroscopique.

13. Procédé selon la revendication 11, dans lequel ledit élément scintillateur hygroscopique (21) est prévu dans un récipient essentiellement étanche à la lumière (20), qui incorpore une entrée adaptée en vue de permettre audit gaz d'accéder audit élément et qui empêche la lumière de pénétrer dans ledit récipient ou de s'en échapper.

14. Procédé selon la revendication 11, lequel récipient (20) comporte en outre une sortie afin de permettre le passage dudit gaz à travers celle-ci.

15. Procédé selon l'une quelconque des revendications 9 à 14, dans lequel la lumière émise par ledit scintillateur hygroscopique (41) est mesurée à distance à l'aide dudit moyen de mesure (44) séparé spatialement dudit scintillateur hygroscopique, mais relié optiquement à celui-ci.

16. Procédé selon l'une quelconque des revendications 11 à 15, dans lequel la moyenne temporelle de la sortie du moyen de mesure est mesurée sous la forme d'un courant continu, et employée pour indiquer la radiotoxicité du tritium dudit gaz, et/ou son activité d'eau tritiée sur un compteur, un affichage numérique, sous forme d'un signal audible, et/ou sous forme d'une sortie en direction d'un ordinateur, d'un enregistreur chronologique automatique de données, d'un enregistreur, d'un système de commande;

17. Procédé selon l'une quelconque des revendications 9 à 16, dans lequel ledit moyen de mesure (4, 44) comprend un ou plusieurs tubes photomultiplicateurs, galettes multicanaux ou photodiodes.

18. Procédé selon la revendication 17, dans lequel la fréquence des impulsions de signal provenant dudit moyen de mesure (4, 44) est mesurée et employée pour indiquer la radiotoxicité du tritium dudit gaz, et/ou son activité d'eau tritiée, sur un compteur, à un affichage numérique, sous forme d'un signal audible, et/ou sous forme d'une sortie en direction d'un ordinateur, d'une enregistreur chronologique automatique de données, d'un enregistreur ou d'un système de commande ou analogues.

19. Procédé selon la revendication 17 ou 18, dans lequel plus d'un tube photomultiplicateur, galette multicanaux ou photodiode sont prévus.

20. Procédé selon l'une quelconque des revendications 11 à 19, qui comprend en outre l'emploi d'un moniteur de tritium non discriminant afin de mesurer par différence les activités à la fois d'eau tritiée et de tritium élémentaire dans ledit gaz.

21. Procédé selon la revendication 20, dans lequel le moniteur non discriminant est essentiellement identique à l'élément scintillateur (3) selon l'une quelconque des revendications 1 à 7, à l'exception que la couche hygroscopique est omise dans le moniteur non discriminant.

22. Procédé selon l'une quelconque des revendications 9 à 21, dans lequel ledit gaz à mesurer est l'air.

23. Appareil pour contrôler l'activité de la vapeur d'eau tritiée et d'autres espèces tritiées hydrophiles dans un gaz, lequel appareil comprend :
(a) un élément scintillateur hygroscopique (3) selon l'une quelconque des revendications 1 à 7; et
(b) un moyen (4) pour mesurer la lumière émise dudit élément scintillateur hygroscopique (3), la quantité de lumière émise dudit élément scintillateur fournissant une mesure de l'espèce contenant du tritium dans ledit gaz.

24. Appareil selon la revendication 23, dans lequel ledit élément scintillateur est prévu dans un récipient essentiellement étanche à la lumière comportant un moyen d'entrée adapté afin de permettre au gaz de venir en contact avec l'élément scintillateur sans permettre la pénétration ou la sortie de la lumière vers ou à partir dudit récipient.

25. Appareil selon la revendication 23 ou 24, qui comprend de plus des moyens pour mettre ledit gaz en contact avec ledit élément scintillateur hygroscopique.

26. Appareil selon l'une quelconque des revendications 23 à 25, qui comprend en outre une sortie dans ledit récipient afin de permettre le passage dudit gaz ou de ladite vapeur à travers celle-ci.

27. Appareil selon la revendication 25 ou 26, qui comprend une pompe pour faciliter le passage du gaz à travers ledit récipient.

28. Appareil selon l'une quelconque des revendications 23 à 27, dans lequel la lumière émise par ledit élément scintillateur hygroscopique (41) est mesurée à distance à l'aide dudit moyen de mesure de lumière (44) séparé spatialement dudit scintillateur hygroscopique, mais relié optiquement à celui-ci au moyen d'un guide de lumière (42).

29. Appareil selon l'une quelconque des revendications 23 à 28, dans lequel ledit élément scintillateur (41) est prévu sous la forme d'une feuille, d'une fibre, d'une tige, d'un rouleau en spirale, d'une poudre, d'une poudre compacte, d'un vernis, d'une peinture, ou une combinaison desdites formes.

30. Appareil selon l'une quelconque des revendications 23 à 29, dans lequel ledit moyen de mesure (44) comprend un ou plusieurs tubes photomultiplicateurs, galettes multicanaux ou photodiodes.

31. Appareil selon la revendication 30, dans lequel la fréquence des impulsions de signal provenant dudit moyen de mesure est mesurée et employée pour indiquer la radiotoxicité du tritium dudit gaz et/ou son activité d'eau tritiée, sur un compteur, un affichage numérique, sous forme d'un signal audible, et/ou sous forme d'une sortie électrique en direction d'un ordinateur, d'un enregistreur chronologique automatique de données, d'une enregistreur ou d'une électronique de commande.

32. Appareil selon la revendication 30, dans lequel il est prévu une pluralité de tube photomultiplicateur, galette multicanaux ou photodiode.

33. Appareil selon la revendication 31 ou 32, dans lequel la moyenne temporelle de la sortie dudit moyen de mesure est mesurée sous forme d'un courant continu et employée pour indiquer la radiotoxicité du tritium dudit gaz sur un compteur, un affichage numérique, sous forme d'un signal audio, et/ou sous forme d'une sortie en direction d'un ordinateur, enregistreur chronologique automatique de données, enregistreur, système de commande ou analogues.

34. Appareil selon l'une quelconque des revendications 23 à 33, qui comprend en outre un moniteur du tritium non discriminant de sorte à mesurer par différence les concentrations dans ledit gaz ou ladite vapeur, à la fois de l'eau tritiée ou d'autres espèces hydrophiles éventuelles et du tritium élémentaire ou d'autres espèces radioactives hydrophobes présentes.

35. Appareil selon la revendication 34, dans lequel ledit moniteur non discriminant est essentiellement identique à un élément scintillateur (3) selon l'une quelconque des revendications 1 à 7, à l'exception que la couche hygroscopique est omise dans le moniteur non discriminant.

36. Appareil selon l'une quelconque des revendications 23 à 35, qui comprend en outre un deuxième moniteur de rayonnement scellé afin de compenser les champs de rayonnement de fond, par soustraction.

37. Appareil selon la revendication 35, dans lequel ledit moniteur de rayonnement scellé est essentiellement identique au scintillateur selon l'une quelconque des revendications 1 à 5 et scellé dans un récipient exempt de gaz radioactif.

38. Appareil selon la revendication 23, dans lequel le gaz à contrôler comprend l'air.

39. Appareil selon la revendication 23, qui est incorporé dans un masque respiratoire.
